(19) Europäisches Patentamt
European Patent Office
Office européen des brevets

(11) EP 3 228 409 A1

(12) EUROPÄISCHE PATENTANMELDUNG

(43) Veröffentlichungstag:
11.10.2017 Patentblatt 2017/41

(51) Int Cl.:
B23B 51/06 (2006.01) B23P 15/32 (2006.01)

(21) Anmeldenummer: 17159872.5

(22) Anmeldetag: 08.03.2017

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(30) Priorität: 07.04.2016 CH 4482016

(71) Anmelder: Mikron Tool Sa Agno
6982 Agno (CH)

(72) Erfinder:
• GENINI, Mattia
6592 Sant Antonino (CH)
• GOTTI, Alberto
6854 San Pietro die Stabio (CH)
• SCHNYDER, Markus
6935 Bosco Luganese (CH)

(74) Vertreter: Frischknecht, Harry Ralph
Isler & Pedrazzini AG
Giesshübelstrasse 45
Postfach 1772
8027 Zürich (CH)

(54) **SPANABHEBENDES WERKZEUG**

(57) Ein spanabhebendes Werkzeug (1) umfasst einen sich entlang einer Mittelachse (M) erstreckenden Einspannabschnitt (2), ein sich dem Einspannabschnitt (2) anschliessenden einen Nenndurchmesser (DN) aufweisenden Schneidabschnitt (3) und mindestens ein Kühlkanal (4), welcher vorzugsweise im Einspannabschnitt (2) und im Schneidabschnitt (3) verläuft, wobei die Querschnittsform des Kühlkanals (4) ist in einem Querschnittsbereich (Q) des jeweiligen Abschnittes (2, 3) angeordnet, in welchem die Vergleichsspannung bei einer spanabhebenden Belastung einen möglichst geringen Wert aufweist, und/oder wobei die Querschnittsform des Kühlkanals (4) durch ein innenliegendes Kurvensegment (5), ein beabstandet dazu angeordnetes aussenliegendes Kurvensegment (6) und über zwei die beiden Kurvensegmente (5, 6) verbindende Tangenten (7) definiert ist.

FIG. 1

EP 3 228 409 A1

**Beschreibung**

TECHNISCHES GEBIET

Die vorliegende Erfindung betrifft ein spanabhebendes Werkzeug, insbesondere ein Bohrwerkzeug, mit einem Kühlkanal nach dem Oberbegriff von Anspruch 1.

STAND DER TECHNIK

Aus dem Stand der Technik ist bekannt, dass während eines Bohrprozesses zur Herstellung einer Bohrung das Bohrwerkzeug mit einem Kühlmittel gekühlt oder mit einer Schmieremulsion geschmiert wird. Das Kühlmittel bzw. das Schmiermittel kann dabei über vielfältige Weise zur Schneide des Bohrwerkzeuges gebracht werden. Beispielsweise über im Bohrwerkzeug angeordnete interne Fluidkanäle, welche sich vom Einspannschaft bis hin zur Bohrerspitze erstrecken. Alternativ kann das Kühlmittel bzw. Schmiermittel auch direkt dem Bohrer über einen Schlauch von aussen zugeführt werden.

Durch die Anordnung der Fluidkanäle, welche sich bis hin zur Bohrerspitze erstrecken, ergeht meist das Problem, dass der Bohrer stark geschwächt wird. Es kann dabei insbesondere zu Brüchen im Bohrer führen.

DARSTELLUNG DER ERFINDUNG

Ausgehend von diesem Stand der Technik liegt der Erfindung die Aufgabe zugrunde, ein spanabhebendes Werkezeug zu schaffen, welches die Nachteile des Standes der Technik überwindet. Insbesondere soll das Werkzeug gegenüber Brüchen weniger anfällig sein.

Diese Aufgabe löst der Gegenstand nach Anspruch 1. Demgemäss umfasst ein spanabhebendes Werkzeug einen sich entlang einer Mittelachse erstreckenden Einspannabschnitt, ein sich dem Einspannabschnitt anschliessenden einen Nenndurchmesser aufweisenden Schneidabschnitt und mindestens ein Kühlkanal. Der Kühlkanal verläuft vorzugsweise im Einspannabschnitt und im Schneidabschnitt.

In einer ersten Ausführungsform der Erfindung ist die Querschnittsform des Kühlkanals in einem Querschnittsbereich des jeweiligen Abschnittes, also des Einspannabschnittes und/oder des Schneidabschnittes bzw. des Spanabschnittes, angeordnet, in welchem die Vergleichsspannung bei einer spanabhebenden Belastung einen möglichst geringen Wert aufweist.

In einer zweiten Ausführungsform der Erfindung ist die Querschnittsform des Kühlkanals durch ein innenliegendes Kurvensegment, ein beabstandet dazu angeordnetes aussenliegendes Kurvensegment und über zwei die beiden Kurvensegmente verbindende Tangenten definiert.

Eine dritte Ausführungsform der Erfindung ist dadurch gekennzeichnet, dass die Querschnittsform des Kühlkanals in einem Querschnittsbereich des jeweiligen Abschnittes, also des Einspannabschnittes und/oder des Schneidabschnittes bzw. des Spanabschnittes, angeordnet ist, in welchem die Vergleichsspannung bei einer spanabhebenden Belastung einen möglichst geringen Wert aufweist, und dass die Querschnittsform des Kühlkanals durch ein innenliegendes Kurvensegment, ein beabstandet dazu angeordnetes aussenliegendes Kurvensegment und über zwei die beiden Kurvensegmente verbindende Tangenten definiert wird.

Allen drei Ausführungsformen ist gemeinsam, dass durch die entsprechende Ausbildung der Querschnittsform das Werkzeug gegenüber Brüchen weniger anfällig ist.

Bei der ersten Ausführung ergeht der Vorteil, dass durch die Anordnung der Querschnittsform in einem Bereich, in welchem die Vergleichsspannung einen möglichst geringen Wert aufweist, die Querschnittsform an die bei der Bearbeitung auftretenden Spannungen optimiert werden kann. Somit erstreckt sich die Querschnittsform in Bereichen, in welchen nur eine entsprechend geringe Spannung auftritt.

Bei der zweiten Ausführung ergeht der Vorteil, dass die Form als solche sich günstig auf die im Werkzeug auftretenden Spannungen auswirkt. Dadurch können die Spannungsspitzen, welche einen Bruch begünstigen, vermindert werden. Das Werkzeug wird also robuster.

Die dritte Ausführungsform kombiniert die Vorteile der ersten und der zweiten Ausführungsform.

Unter der Ausdrucksweise "Vergleichsspannung" wird eine fiktive einachsige mechanische Spannung verstanden, die eine ähnliche Materialbeanspruchung darstellt, wie ein realer mehrachsiger Spannungszustand. Der Begriff "Vergleichsspannung" ist in der technischen Mechanik, insbesondere Festigkeitslehre, dem Fachmann bekannt. Besonders bevorzugt wird unter der Vergleichsspannung die Vergleichsspannung nach von Mises verstanden.

Unter der Ausdrucksweise "Querschnittsform" wird die Form des Kühlkanals verstanden, welche in einer Querschnittsfläche, die quer, also rechtwinklig, zur Mittelachse verläuft sichtbar ist.

Unter der Ausdrucksweise "Querschnittsbereich" wird ein Bereich des spanabhebenden Werkzeuges im Querschnitt quer, also rechtwinklig, zur Mittelachse verstanden. In diesem Bereich weist die Vergleichsspannung einen möglichst geringen Wert auf.

Mit der Ausdrucksweise "innenliegend" und "aussenliegend" im Zusammenhang mit den Kurvensegmenten wird die Lage der Kurvensegmente im Querschnitt des spanabhebenden Werkzeuges definiert. Das innenliegende Kurvensegment liegt bezüglich der Mittelachse M gesehen näher an der Mittelachse als das aussenliegende Kurvensegment.

Vorzugsweise ist die Vergleichsspannung im besagten Querschnittsbereich im Bereich von 10 bis 25% der maximalen im Werkzeug auftretenden Vergleichsspannung. Besonders bevorzugt wird der Kühlkanal also in einem Querschnittsbereich angeordnet, in welchem die Vergleichsspannung im Bereich von 10 bis 25% liegt. Dies insbesondere unter Massgabe, dass sich der Querschnittsbereich ausserhalb eines inneren Begrenzungsdurchmessers von mindestens 10% oder mindestens 15% oder mindestens 20% befindet. Der Vergleich mit der maximalen Vergleichsspannung bezieht sich vorzugsweise auf die gleiche Schnittebene.

Vorzugsweise füllt die Querschnittsform der Kühlkanäle den besagten Querschnittsbereich, insbesondere unter der Massgabe, dass die Querschnittsform ausserhalb eines inneren Begrenzungsdurchmessers von mindestens 10% oder mindestens 15% oder mindestens 20% befindet, maximal aus. Das heisst die Querschnittsfläche wird über den Querschnittsbereich, in welchem die Vergleichsspannung möglichst gering ist, optimiert. Hierdurch kann eine möglichst grosse Querschnittsfläche des Kühlkanals erreicht werden, wodurch der Durchfluss des Kühlmittels verbessert werden kann.

Alternativ füllt die Querschnittsform der Kühlkanäle den besagten Querschnittsbereich, insbesondere unter der Massgabe, dass die Querschnittsform ausserhalb eines inneren Begrenzungsdurchmessers von mindestens 10% oder mindestens 15% oder mindestens 20% befindet, mindestens über 75%, besonderes bevorzugt mindestens über 80% aus. Hierdurch wird zwar die Querschnittsfläche des Kühlkanals leicht verkleinert, aber es kann die mechanische Stabilität verbessert werden.

Vorzugsweise ist das Kurvensegment durch ein Kreissegment definiert. Alternativ kann das Kurvensegment durch eine Ellipse definiert werden. Das innenliegende Kurvensegment und das aussenliegende Kurvensegment können unterschiedliche geometrische Formen aufweisen.

In einer Alternative wäre es denkbar, dass das aussenliegende Kurvensegment annähernd die Form einer Geraden hat, welche endseitig gekrümmt ausgebildet ist, wobei sich an die Krümmung die Tangenten anschliessen. Mit einer solchen Form wird eine Art Dreieck bereitgestellt.

Vorzugsweise ist der Durchmesser des innenliegenden Kurvensegmentes kleiner als der Durchmesser des aussenliegenden Kurvensegmentes ist.

Vorzugsweise sind die Kurvensegmente zum Innenraum des Kühlkanals konkav zum Inneren des Kühlkanals ausgebildet. Die Form des Querschnittes hat also im Wesentlichen die Form eines Tropfens.

Vorzugsweise liegen die Zentren der Kurvensegmente auf einer gemeinsamen radial zur und durch die Mittelachse verlaufenden Geraden.

Falls zwei Kühlkanäle vorhanden sind, liegen vorzugsweise alle Zentren der Kurvensegmente auf einer gemeinsamen Geraden, welche quer und durch die Mittelachse verläuft.

In einer ersten Variante liegt die Querschnittsform des Kühlkanals im Schneidabschnitt innerhalb eines äusseren Begrenzungsdurchmessers, der maximal 70% oder maximal 80% des Nenndurchmessers des Werkzeuges entspricht.

In einer zweiten Variante liegt die Querschnittsform des Kühlkanals im Schneidabschnitt ausserhalb eines inneren Begrenzungsdurchmessers, der mindestens 10% oder mindestens 15% oder mindestens 20%des Nenndurchmessers des Werkzeuges entspricht.

Eine dritte Variante ist dadurch gekennzeichnet, dass die Querschnittsform des Kühlkanals im Schneidabschnitt innerhalb eines äusseren Begrenzungsdurchmessers, der maximal 70% oder maximal 80% des Nenndurchmessers des Werkzeuges entspricht, liegt und/oder dass die Querschnittsform des Kühlkanals im Schneidabschnitt ausserhalb eines inneren Begrenzungsdurchmessers, der mindestens 10% oder mindestens 15% oder mindestens 20%des Nenndurchmessers des Werkzeuges entspricht, liegt.

Vorzugsweise stehen das Zentrum des innenliegenden Kurvensegments und das Zentrum des aussenliegenden Kurvensegmentes mit einem Abstand zueinander stehen.

Vorzugsweise ist die Position des Zentrums des innenliegenden Kurvensegmentes so gewählt, dass dieses nicht im Bereich zwischen dem Zentrum des aussenliegenden Kurvensegmentes und des Randes des aussenliegenden Kurvensegmentes liegt. Vorzugsweise ist die Position des aussenliegenden Kurvensegmentes so gewählt, dass dieses nicht im Bereich zwischen dem Zentrum des innenliegenden Kurvensegmentes und des Randes des innenliegenden Kurvensegmentes liegt.

Vorzugsweise liegt der besagte Abstand zwischen den Zentren im Bereich von 4/8 bis 6/8, insbesondere bei 5/8 des Durchmessers des aussenliegenden Kurvensegmentes ist. Mathematisch ausgedrückt heisst dies, dass der Abstand gleich 4/8 bis 6/8 des Durchmessers des aussenliegenden Kurvensegmentes ist bzw. dass der Abstand gleich 5/8 des Durchmessers des aussenliegenden Kurvensegmentes ist.

Vorzugsweise entspricht der Abstand im Wesentlichen dem Durchmesser des innenliegenden Kurvensegmentes.

Vorzugsweise liegt der Durchmesser des innenliegenden Kurvensegmentes im Bereich von 4/8 bis 6/8, insbesondere bei 5/8, des Durchmessers des aussenliegenden Kurvensegmentes ist. Der Durchmesser des aussenliegenden Kurvensegmentes ist dabei grösser als derjenige des innenliegenden Kurvensegmentes.

Vorzugsweise nimmt die lichte Weite des Querschnittes des Kühlkanals mit zunehmendem Abstand von der Mittelachse zu.

Weitere Varianten des Werkzeuges sind dadurch gekennzeichnet,

dass die Querschnittsfläche des Kühlkanals und/oder die Querschnittsform des Kühlkanals und/oder die Querschnittslage des Kühlkanals bezüglich der Mittelachse (M) über die gesamte Länge des Kühlkanals konstant ist, und/oder
dass genau zwei sich bezüglich der Mittelachse diametral gegenüberliegende Kühlkanäle vorgesehen sind, und/oder
dass mindestens drei oder mindestens vier in gleichen Winkelabständen zueinander liegende Kühlkanäle vorgesehen sind; und/oder
dass der Nenndurchmesser kleiner als 12 Millimeter, insbesondere kleiner als 8 mm ist, und/oder
dass der mindestens eine Kühlkanal helixartig um die Mittelachse sich erstreckt, wobei die Steigung des helixartigen Kühlkanals vorzugsweise im Bereich von 0° bis 40°, insbesondere im Bereich von 6° bis 40° oder im Bereich von 6° bis 30°, liegt, und/oder
dass der Durchmesser des Einspannabschnittes gleich dem oder grösser als der Nenndurchmesser des Schneidabschnittes ist.

Vorzugsweise ist das spanabhabende Werkzeug ein Spiralbohrer oder ein Fräswerkzeug oder ein Reibahle oder ein Sonderwerkzeug.

Ein Verfahren zur Herstellung eines spanabhebenden Werkzeuges nach obiger Beschreibung ist dadurch gekennzeichnet, dass in einem Schritt der Bestimmung der Querschnittsform eine Spannungsanalyse des Werkzeuges unter einer vorgegebenen Belastung vorgenommen wird, wobei der Querschnittsbereich, in welchem die Vergleichsspannung bei einer spanabhebenden Belastung einen möglichst geringen Wert aufweisen soll, bestimmt wird.

Die Querschnittsfläche des Kühlkanals wird auf den Querschnittsbereich optimiert.

Ein Rohling dient zur Herstellung eines spanabhebenden Werkzeuges nach obiger Beschreibung, wobei der Rohling mindestens ein Kühlkanal nach obiger Beschreibung umfasst.

Weitere Ausführungsformen sind in den abhängigen Ansprüchen angegeben.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Fig. 1    eine schematische Ansicht eines Querschnittes eines spanabhebenden Werkzeuges nach einer Ausführung der vorliegenden Erfindung;
Fig. 2    eine perspektivische Ansicht einer Spitze eines Spiralbohrers mit einem Austritt von Kühlkanälen gemäss einer Ausführung der vorliegenden Erfindung;
Fig. 3    eine weitere perspektivische Ansicht nach Figur 2;
Fig. 4    eine Frontansicht des Spiralbohrers nach den Figuren 2 und 3;
Fig. 5    eine Rückansicht des Spiralbohrers nach den Figuren 2 bis 4;
Fig. 6    eine perspektivische Ansicht eines Spiralbohrers mit einem Austritt von Kühlkanälen gemäss einer weiteren Ausführung der vorliegenden Erfindung; und
Fig. 7    eine Ansicht eines Querschnitts eines spanabhebenden Werkzeuges gemäss einer der vorhergehenden Figuren mit eingezeichneten Spannungsverhältnissen.

BESCHREIBUNG BEVORZUGTER AUSFÜHRUNGSFORMEN

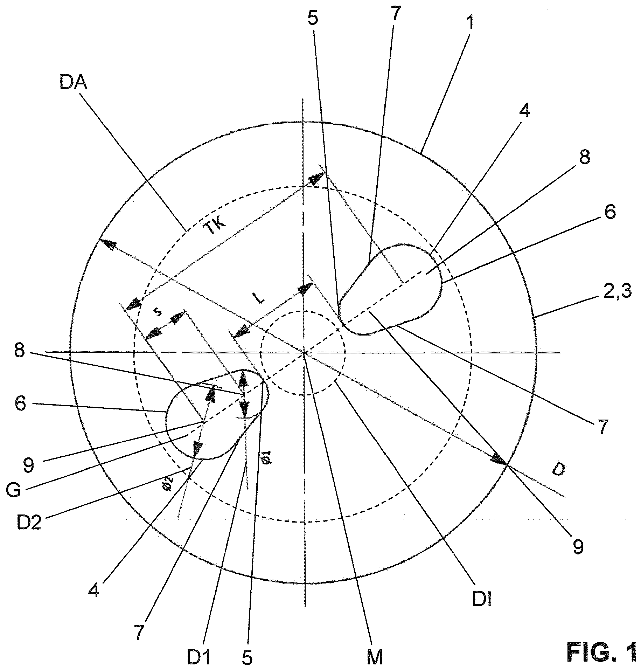

Die Figur 1 zeigt einen Querschnitt rechtwinklig zur Mittelachse eines spanabhebenden Werkzeuges 1. Das spanabhebende Werkzeug 1 umfasst einen sich entlang einer Mittelachse M erstreckenden Einspannabschnitt 2, einen sich dem Einspannabschnitt 2 anschliessenden Schneideabschnitt 3 und mindestens ein Kühlkanal 4.

Der Querschnitt gemäss der Figur 1 kann sowohl den Querschnitt des Einspannabschnittes 2 als auch denjenigen des Schneideabschnittes 3 repräsentieren.

Der Einspannabschnitt 2 dient der Einspannung des Werkzeuges 1 in eine Werkzeugmaschine und der Schneideabschnitt 3 dient der spanabhebenden Bearbeitung eines Werkstückes.

In der gezeigten Ausführungsform sind zwei Kühlkanäle 4 angeordnet. Die Kühlkanäle 4 dienen der Zuführung von Kühl- und/oder Schmiermitteln zum Schneidabschnitt 3. Die Kühlkanäle 4 erstrecken sich vorzugsweise durch den Einspannabschnitt 2 und durch den Schneidabschnitt 3. In der gezeigten Ausführungsform liegen die beiden Kühlkanäle bezüglich der Mittelachse M einander diametral gegenüber.

In anderen Ausführungsformen können auch mehr als zwei Kühlkanäle angeordnet sein, welche dann auch nicht notwendigerweise diametral gegenüber liegen. Vorzugsweise ist aber der Winkelabstand zwischen allen Kühlkanälen gleich.

Die Querschnittsform des Kühlkanals 4 ist in einem Querschnittsbereich Q des jeweiligen Abschnittes angeordnet, in welchem die Vergleichsspannung bei einer spanabhebenden Belastung einen möglichst geringen Wert aufweist. Der Querschnittsbereich Q wird in der Figur 1 mit einer gestrichelten Linie gezeigt. Die gestrichelte Linie verläuft dabei schematisch und kann auch eine andere Form aufweisen. Die Anordnung des Kühlkanals 4 in einem Querschnittsbereich Q im Einspannabschnitt 2 beziehungsweise im Schneideabschnitt 3 hat den Vorteil, dass die Querschnittsform des Kühlkanals derart optimiert werden kann, sodass dieser an Orten liegt, welche einer geringen mechanischen Belastung unterworfen sind. Hierdurch kann die Gesamtstabilität des Werkzeuges massiv verbessert werden.

Die Querschnittsform des Kühlkanals 4 wird in der gezeigten Ausführungsform durch ein innenliegendes Kurvensegment 5, hier ein Kreissegment, und ein beabstandet dazu angeordnetes aussenliegendes Kurvensegment 6, hier Kreissegment, sowie durch zwei die beiden Kurvensegmente 5, 6 verbindendende Tangenten 7 definiert. Die Tangenten liegen dabei tangential zu den entsprechenden Kurvensegmenten. Durch die beiden Kurvensegmente 5, 6 und die beiden Tangenten 7 wird ein geschlossener Linienzug bereitgestellt, welcher die Querschnittsform des Kühlkanals 4 definiert.

Mit anderen Worten gesagt weist die Querschnittsform des Kühlkanals 4 in der gezeigten Ausführungsform eine tropfenförmige Ausgestaltung auf.

Das Kurvensegment 5 muss nicht zwingend ein Kreissegment sein. Das Kurvensegment 5 kann auch elliptisch sein oder eine andere Form aufweisen.

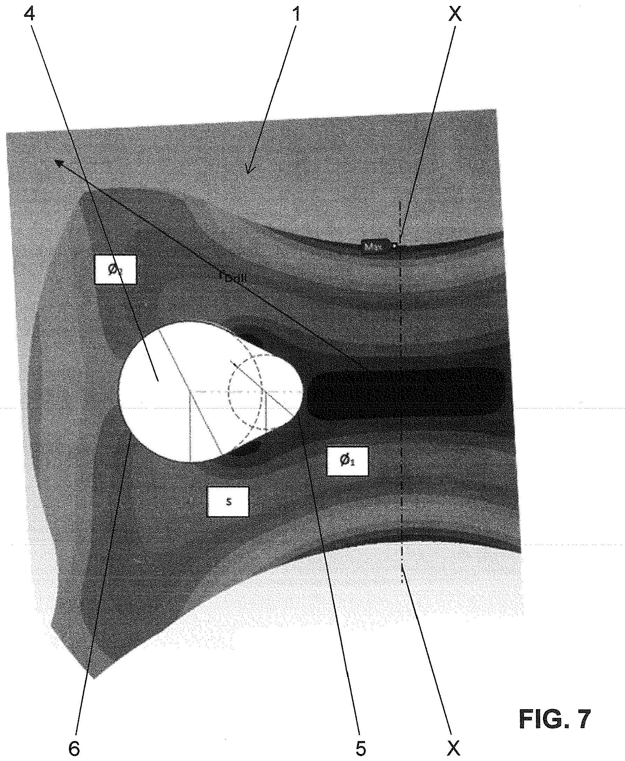

Die Vergleichsspannung im besagten Querschnittsbereich ist vorzugsweise im Bereich von 10 bis 25% der maximalen Vergleichsspannung, insbesondere unter der Massgabe, dass sich der Querschnittsbereich ausserhalb eines inneren Begrenzungsdurchmessers DI von mindestens 10% oder mindestens 15% oder mindestens 20% befindet. Die Spannungsverhältnisse werden in der Figur 7 genauer dargestellt. Dort kann gut erkannt werden, dass im Bereich des Kühlkanals die Werte der Vergleichsspannung gegenüber anderen Bereichen, insbesondere im Bereich der Spannut 12 klein sind. An der Stelle X werden die höchsten Spannungswerte erwartet. Auch kann gut erkannt werden, dass die Vergleichsspannung im Bereich zwischen den beiden Kühlkanälen ebenfalls vergleichsweise klein ist.

Die Querschnittsform des Kühlkanals füllt den besagten Querschnittsbereich Q, in welchem die Vergleichsspannung bei einer spanabhenden Bearbeitung einen möglichst geringen Wert aufweist, vorzugsweise maximal aus. Dies insbesondere unter der Massgabe, dass die Querschnittsform ausserhalb eines inneren Begrenzungsdurchmessers DI von mindestens 10% oder mindestens 15% oder mindestens 20% befindet. Das heisst, dass die Querschnittsfläche des Kühlkanals 4 optimiert werden kann, so dass der durch den Kühlkanal 4 hindurchzuführende Volumenstrom maximiert werden kann.

Alternativ kann die Querschnittsform des Kühlkanals 4 den besagten Querschnittsbereich Q mindestens zu 75%, besonders bevorzugt mindestens zu 80% ausfüllen. Dies insbesondere unter der Massgabe, dass die Querschnittsform ausserhalb eines inneren Begrenzungsdurchmessers DI von mindestens 10% oder mindestens 15% oder mindestens 20% befindet. Auch hier wird eine Maximierung der Querschnittsfläche der Querschnittsform angestrebt, wobei zusätzlich das Werkzeug gegenüber Brüchen aufgrund der geringeren Schwächung robuster ausgebildet ist.

Der Durchmesser D1 des innenliegenden Kurvensegmentes 5 ist hier kleiner als der Durchmesser D2 des aussenliegenden Kurvensegmentes 6. Dadurch kann sich die Kühlflüssigkeit im Querschnitt des Kühlkanals 4 bei einer Rotation des Werkzeuges 1 optimal verteilen.

Die Kurvensegmente 5, 6 sind zum Innenraum des Kühlkanals 4 konkav ausgebildet. Somit wird die oben erwähnte Tropfenform geschaffen.

Die Zentren 8, 9 der Kurvensegmente 5, 6, hier der Kreissegmente, liegen auf einer gemeinsamen Geraden G. Die Gerade G verläuft radial zur Mittelachse M und erstreckt sich hier durch die Mittelachse M hindurch. Bei zwei diametral bezüglich der Mittelachse M angeordneten Kühlkanäle 4 liegen die Zentren von allen Kreissegmenten auf einer gemeinsamen Geraden. Bei einer anderen Anzahl von Kühlkanälen ist dies aber nicht notwendigerweise der Fall. Bezüglich der Querschnittsform eines Kühlkanals ist es aber vorteilhaft, wenn die Zentren 8, 9 der Kreissegmente 5, 6 des entsprechenden Kühlkanals auf einer gemeinsamen Geraden G liegen.

Die Querschnittsform des Kühlkanals 4 liegt insbesondere im Schneideabschnitt 3 innerhalb eines äusseren Begrenzungsdurchmessers DA. Der äussere Begrenzungsdurchmesser DA wird in der Figur 1 schematisch gezeigt. Der äussere Begrenzungsdurchmesser DA entspricht maximal 70% oder maximal 80% des Nenndurchmessers DN des Werkzeuges 1. Durch die Anordnung innerhalb dieses Begrenzungsdurchmessers DA wird sichergestellt, dass gegen aussen hin, also zwischen dem äussersten Punkt des aussenliegenden Kreissegmentes 6 und dem Nenndurchmesser genügend Materialstärke vorhanden ist.

Bezüglich der inneren Begrenzung liegt die Querschnittsform des Kühlkanals 4 im Schneideabschnitt 3 ausserhalb eines inneren Begrenzungsdurchmessers DI. der Begrenzungsdurchmesser DI ist in der Figur 1 ebenfalls eingezeichnet. Der Begrenzungsdurchmesser DI entspricht mindestens 10% oder mindestens 15% oder mindestens 20% des Nenndurchmessers des Werkzeuges.

Das Zentrum 8 des innenliegenden Kreissegmentes 5 und das Zentrum 9 des aussenliegenden Kreissegmentes 6 stehen in einem Abstand s zueinander. Der Abstand s ist dabei derart gewählt, dass die Kreissegmente 5, 6 über die Tangente 7 miteinander verbindbar sind. Der Abstand s liegt vorzugsweise im Bereich 4/8 bis 6/8, insbesondere bei 5/8 des Durchmessers D2 des aussenliegenden Kreissegmentes 5. Formelmässig dargestellt heisst dies:

$$s = 4/8....6/8 * D2; \text{ insbesondere } s = 5/8 * D2$$

Der Abstand S zwischen den Zentren 8, 9 der beiden Kreissegmente 5, 6 entspricht im Wesentlichen dem Durchmesser D1 des innenliegenden Kreissegmentes 5. Der Abstand S kann aber auch grösser oder kleiner sein. Formelmässig dargestellt heisst dies:

$$S = D1$$

Der Durchmesser D1 des innenliegenden Kreissegmentes 5 liegt vorzugsweise im Bereich von 4/8 bis 6/8, insbesondere bei 5/8 des Durchmessers D2 des aussenliegenden Kreissegmentes 6. Formelmässig dargestellt heisst dies:

$$D1 = 4/8....6/8 * D2; \text{ insbesondere } D1 = 5/8 * D2$$

Weiter ist in der Figur 1 des Mass TK eingetragen. Das Mass beschreibt den Abstand zwischen den Zentren der aussenliegenden Kurvensegmente 6- Vorzugsweise ist dieser Abstand im Bereich von 40% bis 70% des Nenndurchmessers, insbesondere im Bereich von 45% bis 55% des Nenndurchmessers.

Weiter ist in der Figur 1 das Mass L eingetragen. Das Mass L ist der Minimalabstand zwischen den beiden Kühlkanälen.

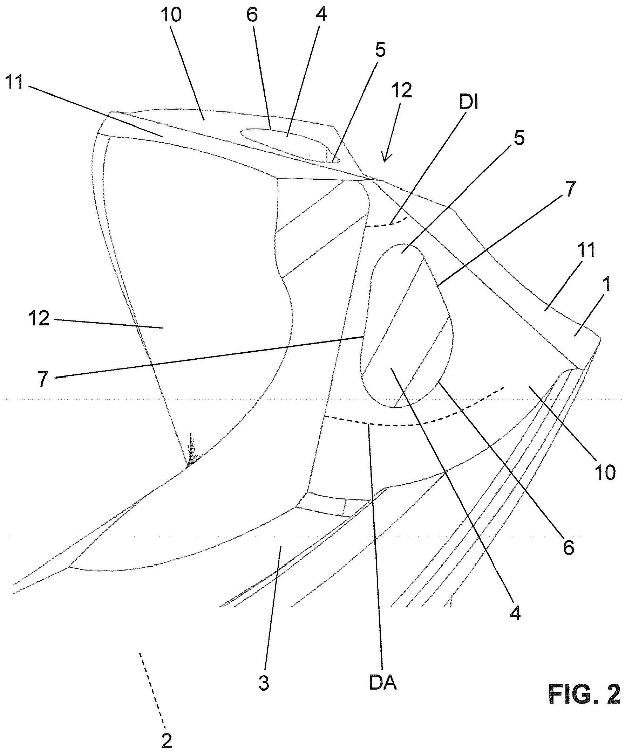

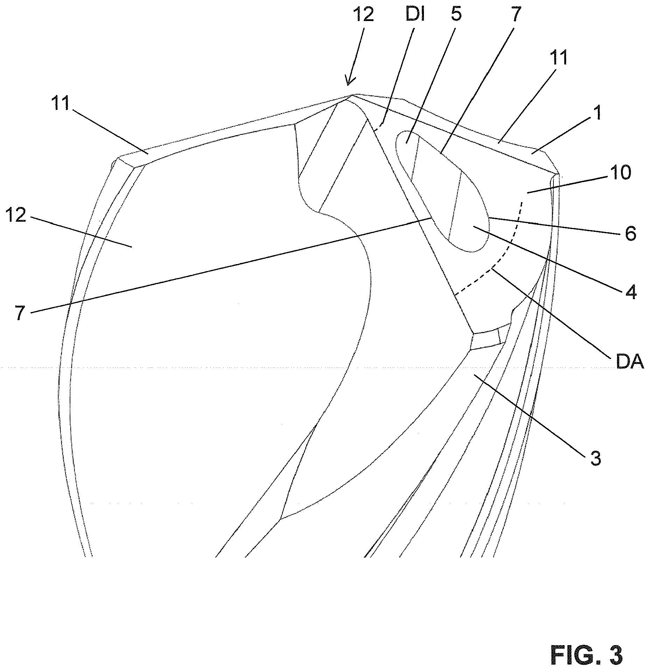

Die Figuren 2 bis 5 zeigen das spanabhebende Werkzeug 1 in der Gestalt eines Spiralbohrers. Der Kühlkanal 4 mündet hier über die Freifläche 10, die sich der Hauptschneide 11 anschliesst. Dabei liegt der Querschnitt des Kühlkanals 4 vollständig innerhalb der Freifläche 10. Dies ist von den Figuren 2 und 3 ersichtlich.

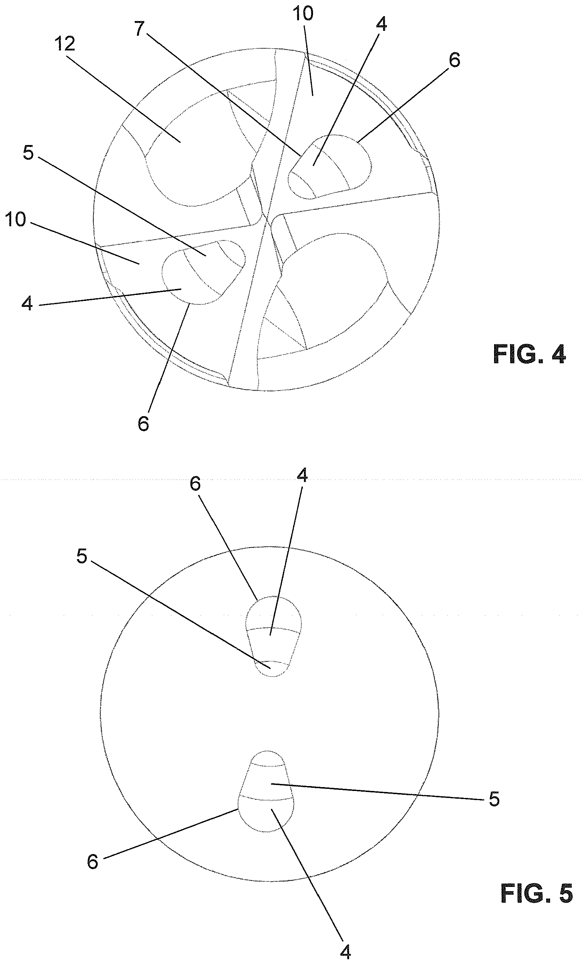

Die Figuren 4 und 5 zeigen entsprechende Ansichten des Spiralbohrers in Richtung der Mittelachse M von vorne (Figur 4) und von hinten (Figur 5). In diesen Figuren wird gezeigt, dass der Querschnitt des Kühlkanals 4 bezüglich Querschnittsfläche und Querschnittsform über die gesamte Länge des Kühlkanals 4 im Querschnitt konstant ist. Ebenfalls ist die Lage des Kühlkanals 4 bezüglich der Mittelachse M über die gesamte Länge des Kühlkanals vorzugsweise konstant. Das heisst, die Distanz des Kühlkanals 4 zur Mittelachse M verändert sich über die gesamte Länge des spanabhebenden Werkzeuges 1 nicht. Im Falle eines Spiralbohrers sind die Kühlkanäle vorzugsweise helixartig angeordnet, wobei diese mindestens im Schneidabschnitt 3 die gleiche Steigung aufweisen wie die Spiralnuten des Spiralbohrers.

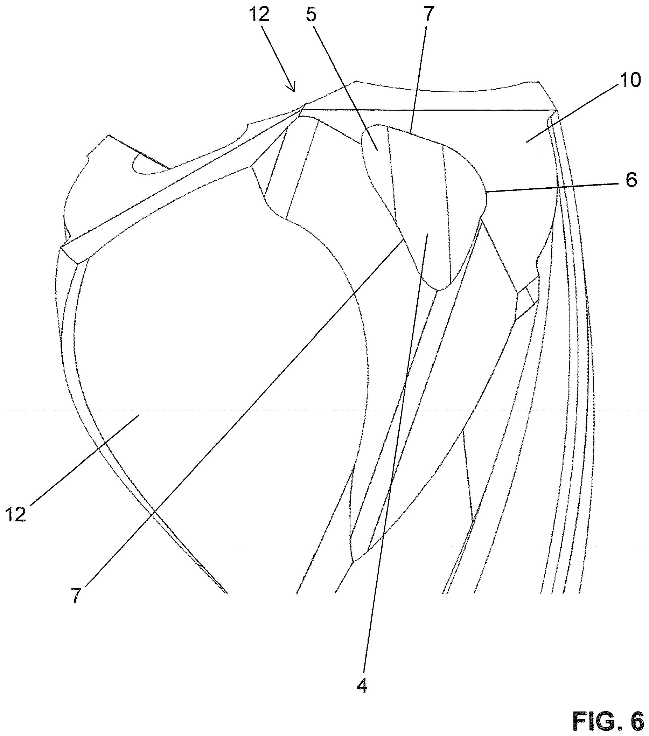

In der Figur 6 wird eine weitere Ausführungsform des spanabhebenden Werkzeuges 1 in der Gestalt eines Spiralbohrers gezeigt. Der Unterschied zu den Figuren 2 bis 5, ist dabei, dass der Querschnitt des Kühlkanals 4 sowohl über die Freifläche 10 als auch über die Spannut 12 ins Freie mündet.

## BEZUGSZEICHENLISTE

| | | | |
|---|---|---|---|
| 1 | spanabhebendes Werkzeug | s | Abstand zwischen den |
| 2 | Einspannabschnitt | | Kurvensegmenten |
| 3 | Schneidabschnitt | X | Maximale Spannung |
| 4 | Kühlkanal | | |
| 5 | innenliegendes | | |
| | Kurvensegment | | |
| 6 | aussenliegendes | | |

|  | Kurvensegment |
| 7 | Tangenten |
| 8 | Zentrum |
| 9 | Zentrum |
| 10 | Freifläche |
| 11 | Hauptschneide |
| 12 | Spannut |
| M | Mittelachse |
| DN | Nenndurchmesser |
| D1 | Durchmesser innenliegendes Kurvensegment |
| D2 | Durchmesser aussenliegendes Kurvensegment |
| DA | äusserer Begrenzungsdurchmesser |
| DI | innerer Begrenzungsdurchmesser |

**Patentansprüche**

1. Spanabhebendes Werkzeug (1) umfassend einen sich entlang einer Mittelachse (M) erstreckenden Einspannabschnitt (2), ein sich dem Einspannabschnitt (2) anschliessenden einen Nenndurchmesser (DN) aufweisenden Schneidabschnitt (3) und mindestens ein Kühlkanal (4), welcher vorzugsweise im Einspannabschnitt (2) und im Schneidabschnitt (3) verläuft,
**dadurch gekennzeichnet,**
**dass** die Querschnittsform des Kühlkanals (4) in einem Querschnittsbereich (Q) des jeweiligen Abschnittes (2, 3) angeordnet ist, in welchem die Vergleichsspannung bei einer spanabhebenden Belastung einen möglichst geringen Wert aufweist,
und/oder
**dass** die Querschnittsform des Kühlkanals (4) durch ein innenliegendes Kurvensegment (5), ein beabstandet dazu angeordnetes aussenliegendes Kurvensegment (6) und über zwei die beiden Kurvensegmente (5, 6) verbindende Tangenten (7) definiert ist.

2. Spanabhebendes Werkzeug (1) nach Anspruch 1, **dadurch gekennzeichnet, dass** die Vergleichsspannung im besagten Querschnittsbereich im Bereich von 10 bis 25% der maximalen Vergleichsspannung, insbesondere unter der Massgabe, dass sich der Querschnittsbereich ausserhalb eines inneren Begrenzungsdurchmessers (DI) von mindestens 10% des Nenndurchmessers oder mindestens 15% des Nenndurchmessers oder mindestens 20% des Nenndurchmessers befindet.

3. Spanabhebendes Werkzeug (1) nach einem der vorhergehenden Ansprüche, **dadurch gekennzeichnet, dass** die Querschnittsform den besagten Querschnittsbereich (Q), insbesondere unter der Massgabe, dass die Querschnittsform ausserhalb eines inneren Begrenzungsdurchmessers (DI) von mindestens 10% des Nenndurchmessers oder mindestens 15% des Nenndurchmessers oder mindestens 20% des Nenndurchmessers befindet, maximal ausfüllt, oder dass die Querschnittsform den besagten Querschnittsbereich (Q), insbesondere unter der Massgabe, dass die Querschnittsform ausserhalb eines inneren Begrenzungsdurchmessers (DI) von mindestens 10% des Nenndurchmessers oder mindestens 15% des Nenndurchmessers oder mindestens 20% des Nenndurchmessers befindet, mindestens über 75%, besonderes bevorzugt mindestens über 80% ausfüllt.

4. Spanabhebendes Werkzeug (1) nach einem der vorhergehenden Ansprüche, **dadurch gekennzeichnet, dass** das Kurvensegment durch ein Kreissegment definiert wird; oder dass das Kurvensegment durch eine Ellipse definiert wird: oder dass das aussenliegende Kurvensegment annähernd die Form einer Geraden hat, welche endseitig gekrümmt ausgebildet ist, wobei sich an die Krümmung die Tangenten anschliessen, wodurch eine Art Dreieck bereitgestellt wird.

5. Spanabhebendes Werkzeug (1) nach einem der vorhergehenden Ansprüche, **dadurch gekennzeichnet, dass** der Durchmesser (D1) des innenliegenden Kurvensegmentes (5) kleiner ist als der Durchmesser (D2) des aussenliegenden Kurvensegmentes (6) ist.

6. Spanabhebendes Werkzeug (1) nach einem der vorhergehenden Ansprüche, **dadurch gekennzeichnet, dass** die Kurvensegmente (5, 6) zum Innenraum des Kühlkanals (4) konkav ausgebildet sind.

7. Spanabhebendes Werkzeug (1) nach einem der vorhergehenden Ansprüche, **dadurch gekennzeichnet, dass** die Zentren (8, 9) der Kurvensegmente (5, 6) auf einer gemeinsamen radial zur und vorzugsweise durch die Mittelachse (M) verlaufenden Geraden (G) liegen.

8. Spanabhebendes Werkzeug (1) nach einem der vorhergehenden Ansprüche, **dadurch gekennzeichnet, dass** die Querschnittsform des Kühlkanals (4) im Schneidabschnitt (3) innerhalb eines äusseren Begrenzungsdurchmessers (DA), der maximal 70% oder maximal 80% des Nenndurchmessers (DN) des Werkzeuges (1) entspricht, liegt und/oder dass die Querschnittsform des Kühlkanals (4) im Schneidabschnitt (3) ausserhalb eines inneren Begrenzungsdurchmessers (DI), der mindestens 10% oder mindestens 15% oder mindestens 20%des Nenndurchmessers des Werkzeuges entspricht, liegt.

9. Spanabhebendes Werkzeug (1) nach einem der vorhergehenden Ansprüche, **dadurch gekennzeichnet, dass** das Zentrum (8) des innenliegenden Kurvensegments (5) und das Zentrum (9) des aussenliegenden Kurvensegmentes (6) mit einem Abstand (s) zueinander stehen.

10. Spanabhebendes Werkzeug (1) nach Anspruch 8, **dadurch gekennzeichnet,**
**dass** der Abstand (s) im Bereich von 4/8 bis 6/8, insbesondere bei 5/8 des Durchmessers (D2) des aussenliegenden Kurvensegmentes (5) ist
und/oder
**dass** der Abstand (s) im Wesentlichen dem Durchmesser (D1) des innenliegenden Kurvensegmentes (5) entspricht.

11. Spanabhebendes Werkzeug (1) nach einem der vorhergehenden Ansprüche, **dadurch gekennzeichnet, dass** der Durchmesser (D1) des innenliegenden Kurvensegmentes (5) im Bereich von 4/8 bis 6/8, insbesondere bei 5/8, des Durchmessers (D2) des aussenliegenden Kurvensegmentes (6) liegt.

12. Spanabhebendes Werkzeug (1) nach einem der vorhergehenden Ansprüche, **dadurch gekennzeichnet, dass** die lichte Weite des Querschnittes des Kühlkanals (4) mit zunehmendem Abstand von der Mittelachse (M) zunimmt.

13. Spanabhebendes Werkzeug (1) nach einem der vorhergehenden Ansprüche, **dadurch gekennzeichnet,**
**dass** die Querschnittsfläche des Kühlkanals (4) und/oder die Querschnittsform des Kühlkanals (4) und/oder die Querschnittslage des Kühlkanals (4) bezüglich der Mittelachse (M) über die gesamte Länge des Kühlkanals (4) konstant ist, und/oder
**dass** genau zwei sich bezüglich der Mittelachse (M) diametral gegenüberliegende Kühlkanäle (4) vorgesehen sind, und/oder
**dass** mindestens drei oder mindestens vier in gleichen Winkelabständen zueinander liegende Kühlkanäle (4) vorgesehen sind, und/oder
**dass** der Nenndurchmesser (DN) kleiner als 12 Millimeter, insbesondere kleiner als 8 mm ist, und/oder
**dass** der mindestens eine Kühlkanal (4) helixartig um die Mittelachse (M) sich erstreckt, wobei die Steigung des helixartigen Kühlkanals (4) vorzugsweise im Bereich von 0° bis 40°, insbesondere im Bereich von 6° bis 40° oder im Bereich von 6° bis 30°, liegt, und/oder
**dass** der Durchmesser des Einspannabschnittes (2) gleich dem oder grösser als der Nenndurchmesser (DN) des Schneidabschnittes (3) ist.

14. Spanabhebendes Werkzeug (1) nach einem der vorhergehenden Ansprüche, **dadurch gekennzeichnet, dass** das spanabhabende Werkzeug (1) ein Spiralbohrer oder ein Fräswerkzeug oder ein Reibahle oder ein Sonderwerkzeug ist.

15. Verfahren zur Herstellung eines spanabhebenden Werkzeuges nach einem der vorhergehenden Ansprüche, **dadurch gekennzeichnet, dass** in einem Schritt der Bestimmung der Querschnittsform eine Spannungsanalyse des Werkzeuges unter einer vorgegebenen Belastung vorgenommen wird, wobei der Querschnittsbereich bestimmt wird, in welchem die Vergleichsspannung bei einer spanabhebenden Belastung einen möglichst geringen Wert aufweist.

16. Rohling zur Herstellung eines spanabhebenden Werkzeuges nach einem der vorhergehenden Ansprüche, **dadurch gekennzeichnet, dass** der Rohling mindestens ein Kühlkanal nach einem der vorhergehenden Ansprüche umfasst.

**FIG. 1**

FIG. 2

FIG. 3

**FIG. 4**

**FIG. 5**

FIG. 6

FIG. 7

Europäisches Patentamt
European Patent Office
Office européen des brevets

**EUROPÄISCHER RECHERCHENBERICHT**

Nummer der Anmeldung

EP 17 15 9872

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S64 42816 U (-) 14. März 1989 (1989-03-14)<br><br>* das ganze Dokument * | 1,4-7,9, 10, 12-14,16 | INV.<br>B23B51/06<br>B23P15/32 |
| X<br><br>A | EP 2 952 278 A1 (OSG CORP [JP]) 9. Dezember 2015 (2015-12-09)<br>* Absätze [0014] - [0022]; Abbildungen 1-5,12 * | 1,4,5,8, 11-14,16<br>2,3,15 | |
| X<br><br><br>A | WO 2004/056519 A2 (GUEHRING JOERG [DE]; KLEINER GILBERT [DE]) 8. Juli 2004 (2004-07-08)<br>* Seiten 1-8; Ansprüche 1-6, 8-10 *<br>* Seiten 20-26; Abbildungen 8,9 * | 1,6, 12-14,16<br><br>2,3,15 | |
| X | DE 33 14 349 A1 (GUEHRING GOTTLIEB [DE]) 25. Oktober 1984 (1984-10-25)<br>* Seite 7, Zeile 13 - Seite 9, Zeile 36; Abbildungen 1,2 * | 1,13,14, 16 | |

RECHERCHIERTE SACHGEBIETE (IPC)

B23B
B23C
B23D
B23P

Der vorliegende Recherchenbericht wurde für alle Patentansprüche erstellt

| Recherchenort | Abschlußdatum der Recherche | Prüfer |
|---|---|---|
| Den Haag | 22. August 2017 | Lorence, Xavier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                                                   
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 9872

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2017

| Im Recherchenbericht angeführtes Patentdokument | | Datum der Veröffentlichung | Mitglied(er) der Patentfamilie | | Datum der Veröffentlichung |
|---|---|---|---|---|---|
| JP S6442816 | U | 14-03-1989 | KEINE | | |
| EP 2952278 | A1 | 09-12-2015 | CN | 104955599 A | 30-09-2015 |
| | | | EP | 2952278 A1 | 09-12-2015 |
| | | | JP | 5926877 B2 | 25-05-2016 |
| | | | JP | WO2014118881 A1 | 26-01-2017 |
| | | | KR | 20150099599 A | 31-08-2015 |
| | | | US | 2015321267 A1 | 12-11-2015 |
| | | | WO | 2014118881 A1 | 07-08-2014 |
| WO 2004056519 | A2 | 08-07-2004 | AU | 2003299281 A1 | 14-07-2004 |
| | | | DE | 10394163 D2 | 03-11-2005 |
| | | | EP | 1572405 A2 | 14-09-2005 |
| | | | KR | 20050085845 A | 29-08-2005 |
| | | | US | 2005244235 A1 | 03-11-2005 |
| | | | WO | 2004056519 A2 | 08-07-2004 |
| DE 3314349 | A1 | 25-10-1984 | KEINE | | |

EPO FORM P0461

Für nähere Einzelheiten zu diesem Anhang : siehe Amtsblatt des Europäischen Patentamts, Nr.12/82